(19) Europäisches Patentamt
European Patent Office
Office européen des brevets

(11) Veröffentlichungsnummer: **0 237 731**
**B1**

(12) # EUROPÄISCHE PATENTSCHRIFT

(45) Veröffentlichungstag der Patentschrift: **04.04.90**

(51) Int. Cl.5: **A 01 N 47/18** // (A01N47/18, 37:46, 37:24, 37:22)

(21) Anmeldenummer: **87101011.2**

(22) Anmeldetag: **24.01.87**

(54) **Mikrobizides Mittel.**

(30) Priorität: **15.02.86 DE 3604791**

(43) Veröffentlichungstag der Anmeldung:
**23.09.87 Patentblatt 87/39**

(45) Bekanntmachung des Hinweises auf die Patenterteilung:
**04.04.90 Patentblatt 90/14**

(84) Benannte Vertragsstaaten:
**AT BE CH DE FR GB IT LI NL**

(56) Entgegenhaltungen:
**EP-A-0 137 729**

(73) Patentinhaber: **RIEDEL-DE HAEN AKTIENGESELLSCHAFT**
**Wunstorfer Strasse 40**
**D-3016 Seelze 1 (DE)**

(72) Erfinder: **Lindner, Wolfgang, Dr.**
**Leinestrasse 3**
**D-3016 Seelze 1 (DE)**
Erfinder: **Gattner, Hans, Dr.**
**Amselweg 1**
**D-3052 Bad Nenndorf (DE)**

(74) Vertreter: **Urbach, Hans-Georg, Dr.**
**Hanauer Landstrasse 526**
**D-6000 Frankfurt am Main 61 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 237 731 B1

**Beschreibung**

Die Erfindung bezieht sich auf ein mikrobizides Mittel, das ein Gemisch mehrerer Wirkstoffe enthält, und die Verwendung dieses Mittels.

Es ist bekannt, daß N-Phenyl-2-chloracetamide als Fungizide zum Schutz von industriellem Material wie Papier, Holz, Farbe, Gummi und Kunststoff eingesetzt werden; diese Fungizide werden unverdünnt oder zusammen mit einem inerten organischen Lösungsmittel verwendet (Europäische Anmeldungsveröffentlichung 0 137 729).

Ferner ist bekannt, daß Wirkstoffkombinationen von Benzimidazolylalkylcarbamaten mit verschiedenen ebenfalls mikrobizid wirksamen Substanzen zum Schutz von technischen Materialien gegen mikrobiellen Abbau verwendet werden; geeignete Substanzen sind beispielsweise N-Dimethyl-N'-phenyl(N'-fluordichlormethyl-thio)sulfamid (Deutsche Offenlegungsschrift 26 07 031 = Britische Patentschrift 15 42 829), Tetramethylthiuramdisulfid (Deutsche Offenlegungsschrift 26 07 032 = Britische Patentschrift 15 39 706) und Halogenmethyl-thiophthalimide (Deutsche Offenlegungsschrift 26 07 033 = Britische Patentschrift 15 42 829). Diese Wirkstoffkombinationen haben den Nachteil, daß ihre Stabilität bei Veränderungen des pH-Wertes unzureichend ist oder daß sie in Farben zu unerwünschten Verfärbungen führen; sie sind somit nicht uneingeschränkt anwendbar.

Aufgabe der Erfindung ist die Bereitstellung eines mikrobiziden Mittels auf der Grundlage einer Wirkstoffkombination, das vor allem gegenüber Pilzen und Hefen ein breites, ausgeglichenes Wirkungsspektrum aufweist und zum Schutz von technischen Materialien gegen den Einfluß von Mikroorganismen geeignet ist.

Die Erfindung betrifft ein mikrobizides Mittel, das gekennzeichnet ist durch einen Gehalt an einer Wirkstoffkombination bestehend aus (A) einem Benzimidazolyl-alkyl-carbamat der Formel (1)

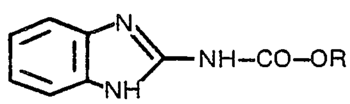

(1)

in der R einen Alkylrest mit 1 bis 4 Kohlenstoffatomen bedeutet, der gegebenenfalls durch den Rest —$OR^1$ substituiert ist, in dem $R^1$ einen Alkylrest mit 1 bis 4 Kohlenstoffatomen oder einen Phenylrest bedeutet, und (B) einem subtituierten Chloracetamid der Formel (2)

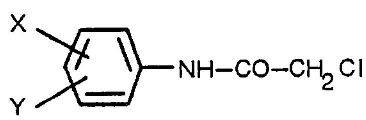

(2)

in der X und Y gleich oder verschieden sind und jeweils ein Wasserstoffatom, ein Halogenatom, eine Hydroxygruppe, eine Cyanogruppe, einen Alkylrest mit 1 bis 4 Kohlenstoffatomen oder einen Alkoxyrest mit 1 bis 4 Kohlenstoffatomen bedeuten.

Das Gewichtsverhältnis der Wirkstoffe (A):(B) beträgt vorzugsweise 1:0,1 bis 1:20 und insbesondere 1:0,5 bis 1:10.

Besonders geeignete Wirkstoffe (A) sind die niederen Alkylester der Benzimidazolylcarbaminsäure, nämlich der Methyl-, Ethyl-, Isopropyl-, n-Propyl- und n-Butyl-ester, sowie substituierte Benzimidazolylethylcarbamate, nämlich der 2-Methoxy-, 2-Ethoxy-, 2-Isopropoxy- und 2-Phenoxy-ethylester. Die Wirkstoffe (A) werden entweder einzeln oder zu mehreren eingesetzt.

Das Benzimidazolyl-alkylcarbamat wird gegebenenfalls in Form eines Sulfonsäuresalzes verwendet. Die sazu eingesetzte Säure hat eine Ionisationskonstante von mehr als $1{,}5 \times 10^{-5}$; besonders geeignet sind Alkansulfonsäuren mit 12 bis 18 Kohlenstoffatomen, z.B. Dodecansulfonsäure, und Alkylbenzolsulfonsäuren mit 12 bis 18 Kohlenstoffatomen im Alkylrest, z.B. Dodecylbenzolsulfonsäure. Vorzugsweise ist Benzimidazolylmethylcarbamatdodecylbenzolsulfonat geeignet.

Geeignete Wirkstoffe (B) sind beispielsweise N-Phenyl-2-chloracetamid, N-(3,4-Dichlorphenyl)-2-chloracetamid, N-(2-Chlor-6-methylphenyl)-2-chloracetamid und vorzugsweise N-(4-Brom-2-methylphenyl)-2-chloracetamid.

Die Wirkstoffe (B) werden entweder einzeln oder zu mehreren eingesetzt.

Das mikrobizide Mittel wird in üblicher Weise als Pulver, Lösung oder Paste formuliert. Die Formulierung enthält das mikrobizide Mittel im allgemeinen in einer Menge von 1 bis 98 Gewichtsprozent, vorzugsweise 10 bis 95 Gewichtsprozent, wobei der Restbestandteil der Formulierung aus üblichen Formulierungshilfsmitteln besteht, z.B. Dispergiermitteln, Lösemitteln, Antibackmitteln, Verdickungsmitteln, Füllstoffen und Trägerstoffen.

Eine pulvrige Formulierung wird beispielsweise durch Vermahlen des mikrobiziden Mittels mit einem anorganischen Träger hergestellt. Als Träger eignet sich hierbei insbesondere Aluminiumsilikat, Tonerde, Kreide, synthetische Kieselsäure und Kaolin. Die Wirkstoffe (A) und (B) liegen hier jeweils in Form fester Partikel mit Durchmessern bis maximal 0,2 mm, vorzugsweise bis maximal 0,06 mm, vor.

Eine Lösung wird beispielsweise durch Auflösen eines Wirkstoffes (A) in Form eines Sulfonsäuresalzes und eines Wirkstoffes (B) in einem Alkoholether als Lösungsmittel erhalten. Als Lösungsmittel sind hierbei insbesondere Monoether, des Glykols geeignet, z.B. Ethylenglykolmonomethylether, -monoethylether und -monoisopropylether.

Eine Paste wird beispielsweise durch Dispergieren des mikrobiziden Mittels in Wasser unter Zusatz eines Dispergiermittels hergestellt. Als Dispergiermittel dient hierbei vor allem Hydroxyethylcellulose, Natriumhexametaphosphat und das Ammoniumsalz einer niedermolekularen Polyacrylsäure.

Das erfindungsgemäße mikrobizide Mittel eignet sich ausgezeichnet zum Schutz von technischen Materialien gegen den Einfluß von Mikroorganismen, insbesondere Pilzen wie Ulocladium consortiale, Aureobasidium pullulans, Aspergillus niger, Penicillium funiculosum, Chaetomium globosum, Cladosporium herbarum, Mucor spec., Paecilomyces varioti, Trichoderma viride, Verticillium glaucum und Sclerophoma pityophila sowie Hefen wie Torula utilis und Candida albicans.

Die mikrobizide Wirksamkeit wird durch Bestimmung der minimalen Hemmstoffkonzentration (MHK-Wert) ermittelt. Der MHK-Wert gibt die niedrigste Konzentration eines Wirkstoffs oder einer Wirkstoffkombination an, bei der das Wachstum des Testkeims noch völlig gehemmt wird. Dazu werden abgestufte Wirkstoffmengen in gelöster Form in Nährböden eingearbeitet, und die Nährböden werden infiziert und anschließend bebrütet. Im Rahmen der Erfindung wird eine modifizierte Methode der Bestimmung der bakteriostatischen Wirkung mit Hilfe des Verdünnungstests angewendet (vgl. Richtlinien für die Prüfung chemischer Desinfektionsmittel, Gustav Fischer Verlag, Stuttgart, 2. Auflage, 1969, Seiten 5 und 6). Als Nährboden dient ein flüssiger Malzagar-N-Nährboden, die homogene Einarbeitung erfolgt bei einer Temperatur von 50°C, und die Bebrütung wird 2 Wochen lang bei einer Temperatur von 29°C durchgeführt. Ein Vergleich der MHK-Werte der erfindungsgemäßen Wirkstoffkombinationen mit denen der Einzelkomponenten ergibt einen Synergismus, errechnet nach der Methode von Kull (Applied Microbiology *9*, 538-541) (1961)).

Die folgenden Beispiele dienen zur näheren Erläuterung der Erfindung. Prozentangaben beziehen sich jeweils auf das Gewicht.

## Beispiel 1

Ein Gemisch aus 3 g Benzimidazolylmethylcarbamat (BCM) und 7 g N-(4-Brom-2-methylphenyl)-2-chloracetamid (BPCA) wurden in 990 g Dimethylsulfoxid gelöst. Die so erhaltene Formulierung wurde zur Ermittlung des MHK-Wertes für verschiedene Testpilze verwendet. Zum Vergleich wurden in analoger Weise die MHK-Werte der Einzelkomponenten BCM und BPCA ermittelt.

Die Werte sind aus der nachstehenden Tabelle 1 ersichtlich.

Tabelle 1

| Testpilz | MHK-Wert (%) | | |
|---|---|---|---|
| | BCM/BPCA-Gemisch (3/7) | BCM | BPCA |
| Aspergillus niger | 0,001 | 0,0005 | 0,005 |
| Mucor spec. | 0,005 | 1,0 | 0,005 |
| Ulocladium consortiale | 0,002 | 1,0 | 0,002 |

Das Vorliegen eines Synergismus wurde errechnet aus der Formel

$$X = \frac{QA}{Qa} + \frac{QB}{Qb}.$$

Hierbei bedeuten QA den MHK-Wert für BCM in der Kombination, Qa dem MHK-Wert für BCM als Einzelwirkstoff, QB den MHK-Wert für BPCA in der Kombination und Qb den MHK-Wert für BPCA als Einzelwirkstoff. (Ein Synergismus liegt vor, wenn X kleiner als 1 ist.) Es ergaben sich folgende Werte:

X = 0,74 (Aspergillus niger)
X = 0,70 (Mucor spec.)
X = 0,70 (Ulocladium consortiale)

## Beispiel 2

Ein Gemisch aus 20 g Benzimidazolylmethylcarbamat-Dodecylbenzolsulfonat (BCMDBS) und 80 g

BPCA wurden in 900 g Ethylglykol gelöst. Die so erhaltene Formulierung wurde zur Ermittlung des MHK-Wertes für verschiedene Testpilze verwendet. Zum Vergleich wurden in analoger Weise die MHK-Werte der Einzelkomponenten BCMDBS und BPCA ermittelt.

Die Werte sind aus der nachstehenden Tabelle 2 ersichtlich.

Tabelle 2

| Testpilz | MHK-Wert (%) | | |
|---|---|---|---|
| | BCMDBS/BPCA-Gemisch (2/8) | BCMDBS | BPCA |
| Mucor spec. | 0,002 | 0,005 | 0,005 |
| Ulocladium consortiale | 0,001 | 0,005 | 0,002 |

Entsprechend Beispiel 1 wurde das Vorliegen eines Synergismus errechnet. Es ergaben sich folgende Werte:

X = 0,40 (Mucor spec.)
X = 0,44 (Ulocladium consortiale)

Beispiel 3

Ein Gemisch aus 333 g BPCA und 83 g BCM wurde mit 584 g Kaolin zu einem Pulver vermahlen. Die Wirkstoffpartikel zeigten danach Durchmesser bis maximal 0,04 mm. Die so erhaltene Formulierung wurde in einer Menge von (a) 0,1%, (b) 0,5% und (c) 1% in drei Proben einer handelsüblichen Dispersionsfarbe eingearbeitet. Zum Vergleich wurden vier weitere Proben (d—g) der Dispersionsfarbe in gleicher Weise mit verschiedenen Mengen von reinem BCM oder reinem BPCA ausgerüstet.

Jeweils 250 g der erhaltenen Proben wurden auf Rundfilterpapiere gestrichen, und die bestrichenen Filterpapiere wurden 72 Stunden lang bei einer Temperatur von 20°C getrocknet. Die getrockneten Filterpapiere wurden auf Malzagar-N-Nährböden, die vorher mit einer Kultur von Ulocladium consortiale beimpft worden waren, aufgelegt. Nach einer Bebrütungszeit von 14 Tagen bei einer Temperatur von 29°C wurde der Grad des Bewuchses auf den Farbanstrichen visuell bewertet.

Die Bewertung ist aus der nachstehenden Tabelle 3 ersichtlich.

Tabelle 3

| Versuch | BCM-Gehalt (%) | BPCA-Gehalt (%) | Bewertung |
|---|---|---|---|
| a | 0,008 | 0,033 | kein Bewuchs, Hemmzone mit Durchmesser von über 3 mm |
| b | 0,041 | 0,166 | kein Bewuchs, Hemmzone mit Durchmesser von über 3 mm |
| c | 0,083 | 0,333 | kein Bewuchs, Hemmzone mit Durchmesser von über 3 mm |
| d | 0,50 | — | deutlicher Bewuchs (über 10% der Gesamtfläche |
| e | — | 0,05 | starker Bewuchs (über 30% der Gesamtfläche) |
| f | — | 0,25 | geringer Bewuchs (unter 10% der Gesamtfläche) |
| g | — | 0,50 | kein Bewuchs, Hemmzone mit Durchmesser von über 3 mm |

Beispiel 4

Beispiel 3 wurde wiederholt mit der Modifizierung, daß die Filterpapiere vor dem Auflegen auf die Nährböden 48 Stunden lang in fließendem Wasser ausgelaugt wurden.

Die Bewertung ist aus der nachstehenden Tabelle 4 ersichtlich.

Tabelle 4

| Versuch | BCM-Gehalt (%) | BPCA-Gehalt (%) | Bewertung |
|---|---|---|---|
| a | 0,008 | 0,033 | geringer Bewuchs (unter 10% der Gesamtfläche) |
| b | 0,041 | 0,166 | kein Bewuchs, keine Hemmzone |
| c | 0,083 | 0,333 | kein Bewuchs, Hemmzone mit Durchmesser von über 3 mm |
| d | 0,50 | — | starker Bewuchs (über 30% der Gesamtfläche) |
| e | — | 0,05 | starker Bewuchs (über 30% der Gesamtfläche) |
| f | — | 0,25 | geringer Bewuchs (unter 10% der Gesamtfläche) |
| g | — | 0,50 | kein Bewuchs, keine Hemmzone |

Beispiel 5

10 g Hydroxyethylcellulose wurden bei einer Temperatur von 75°C in 478 g Wasser eingerührt, und in der erhaltenen homogenen Suspension wurden 10 g Natriummetahexaphosphat und 5 g Ammoniumpolyacrylat gelöst. In diese Suspension wurden nach Abkühlung auf Raumtemperatur nacheinander 97 g fein gemahlenes Benzimidazolyl-(2-isopropoxy)-ethylcarbamat (Partikeldurchmesser bis maximal 0,04 mm) und 400 g fein gemahlenes N-(3,4-Dichlorphenyl)-2-chloracetamid (Partikeldurchmesser bis maximal 0,04 mm) eingerührt. Das Gemisch wurden dann noch 30 Minuten nachgerührt, und es wurde eine homogene, leicht fließende Paste erhalten.

## Patentansprüche

1. Mikrobizides Mittel, gekennzeichnet, durch einen Gehalt an einer Wirkstoffkombination bestehend aus (A) einem Benzimidazolyl-alkylcarbamat der Formel (1)

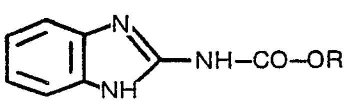

(1)

in der R einen Alkylrest mit 1 bis 4 Kohlenstoffatomen bedeutet, der gegebenenfalls durch den Rest —$OR^1$ substituiert ist, in dem $R^1$ einen Alkylrest mit 1 bis 4 Kohlenstoffatomen oder einen Phenylrest bedeutet, und (B) einem substituierten Chloracetamid der Formel (2)

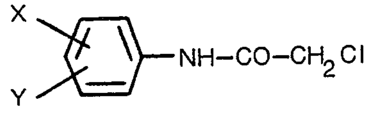

(2)

in der X und Y gleich oder verschieden sind und jeweils ein Wasserstoffatom, ein Halogenatom, eine Hydroxygruppe, eine Cyanogruppe, einen Alkylrest mit 1 bis 4 Kohlenstoffatomen oder einen Alkoxyrest mit 1 bis 4 Kohlenstoffatomen bedeuten.

2. Mittel nach Anspruch 1, dadurch gekennzeichnet, daß das Gewichtsverhältnis (A) zu (B) 1:0,1 bis 1:20 beträgt.

3. Mittel nach Anspruch 1, dadurch gekennzeichnet, daß die Wirkstoffe (A) und (B) jeweils in Form fester Partikel mit Durchmessern im Bereich von 0,01 bis 0,2 mm vorliegen.

4. Verwendung des Mittels gemäß Anspruch 1 zum Schutz von technischen Materialien gegen den Einfluß von Mikroorganismen.

5. Verfahren zur Bekämpfung von Mikroorganismen, dadurch gekennzeichnet, daß ein Mittel gemäß Anspruch 1 in einer wirksamen Menge auf die zu schützenden Materialien aufgebracht wird.

**Revendications**

1. Produit microbicide, caractérisé par une teneur en une combinaision de substances actives consistant en (A) un benzimidazolyl-carbamate d'alkyle de formule (1):

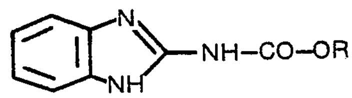

(1)

(dans laquelle R représente un reste alkyle ayant 1 à 4 atomes de carbone, qui est éventuellement substitué par le reste $-OR^1$, dans lequel $R^1$ représente un reste alkyle ayant 1 à 4 atomes de carbone ou un reste phényle) et (B) un chloracétamide substitué, de formule (2):

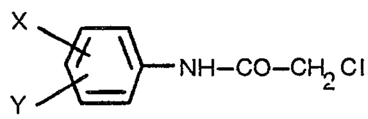

(2)

dans laquelle X et Y sont identiques ou différents et représentent chacun un atome d'hydrogène, un atome d'halogène, un groupe hydroxyle, un groupe cyano, un reste alkyle ayant 1 à 4 atomes de carbone ou un reste alcoxy ayant 1 à 4 atomes de carbone.

2. Produit selon la revendication 1, caractérisé en ce que le rapport pondéral (A) à (B) va de 1:0,1 à 1:20.

3. Produit selon la revendication 1, caractérisé en ce que les substances actives (A) et (B) sont chacune présentes sous forme de particules solides dont le diamètre se situe entre 0,01 et 0,2 mm.

4. Utilisation du produit selon la revendication 1 pour protéger des matières techniques ou industrielles contre l'influence de micro-organismes.

5. Procédé pour combattre des micro-organismes, caractérisé en ce qu'on applique une quantité active d'un produit selon la revendication 1 sur les matières à protéger.

**Claims**

1. Microbicidal agent, characterized in that it contains an active substance combination of (A) a benzimadazolyl alkylcarbamate of the formula (1)

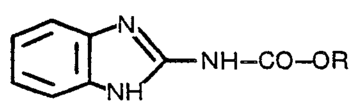

(1)

in which R denotes an alkyl radical which has 1 to 4 carbon atoms and which is optionally substituted by the radical $-OR^1$ in which $R^1$ denotes an alkyl radical having 1 to 4 carbon atoms or a phenyl radical, and (B) a substituted chloroacetamide of the formula (2)

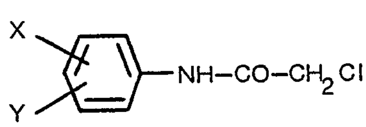

(2)

in which X and Y are identical or different and in each case denote a hydrogen atom, a halogen atom, a hydroxyl group, a cyano group, an alkyl radical having 1 to 4 carbon atoms or an alkoxy radical having 1 to 4 carbon atoms.

2. Agent according to Claim 1, characterized in that the weight radio (A) to (B) is 1:0.1 to 1:20.

3. Agent according to Claim 1, characterized in that the active substances (A) and (B) are present in each case in the form of solid particles having diameters in the range of 0.01 to 0.2 mm.

4. Use of the agent according to Claim 1 for the protection of industrial materials against the influence of microorganisms.

5. Method for controlling microorganisms, characterized in that an effective amount of an agent according to Claim 1 is applied to the materials to be protected.